# DEMANDE DE BREVET EUROPEEN

(11) **EP 0 835 853 A1**
(43) Date de publication de la demande: **15.04.1998**
(21) Numéro de dépôt: 96402184.4
(22) Date de dépôt: 14.10.1996
(51) Int. Cl.: C04B 35/80, C04B 41/87, F16D 69/02

(54) **Elément de friction en matériau composite carbone/carbone-carbure de silicium et procédé pour sa fabrication**

(71) Demandeur: SOCIETE EUROPEENNE DE PROPULSION, 92150 Suresnes (FR)
(72) Inventeur: Domergue, Jean-Marc, 33600 Pessac (FR); Georges, Jean-Michel, 33170 Gradignan (FR); Laxague, Michel, 33200 Bordeaux (FR)
(74) Mandataire: Joly, Jean-Jacques

(57) **Abrégé**

Un élément de friction est réalisé en un matériau composite comprenant un renfort en fibres de carbone et une matrice qui, au moins au voisinage de la ou chaque face frottante, comprend : une première phase contenant du pyrocarbone obtenu par infiltration chimique en phase vapeur, au voisinage des fibres du renfort, une deuxième phase réfractaire carbone ou céramique obtenue au moins en partie par pyrolyse à partir d'un précurseur liquide, et une phase de carbure de silicium obtenue par exemple par siliciuration. De préférence, au moins au voisinage de la ou chaque face frottante, le matériau composite est constitué, en volume, au moins de : 15 % à 35 % de fibres de carbone, 10 % à 55 % de première phase de matrice contenant du pyrocarbone, 5 % à 30 % de deuxième phase de matrice en matériau réfractaire, et 10 % à 35 % de carbure de silicium. L'invention est notamment applicable au freinage ferroviaire et aux véhicules automobiles.

## Description

La présente invention concerne les matériaux composites C/C-SiC, c'est-à-dire ayant un renfort fibreux en carbone densifié par une matrice mixte carbone-carbure de silicium pour des éléments de friction tels que des disques de frein et/ou des patins de freins.

Il est bien connu d'utiliser des éléments de friction en matériau composite C/C fabriqués par élaboration d'une préforme fibreuse en fibres de carbone et densification de la préforme par une matrice en carbone.

Les préformes sont élaborées à partir de feutres ou de textures fibreuses de base telles que des tissus, des tresses, des tricots, des nappes unidirectionnelles de fils, torons ou câbles, ou des complexes formés de plusieurs nappes unidirectionnelles superposées avec des directions différentes et liées entre elles par aiguilletage léger. Pour l'élaboration d'une préforme, plusieurs couches formées de feutre et/ou de strates de texture de base sont superposées et liées entre elles jusqu'à atteindre l'épaisseur désirée. La liaison peut être réalisée par aiguilletage réalisé individuellement sur chaque couche, par exemple comme décrit dans le document US-A-4 790 052. Les feutres ou textures de base utilisées sont en fibres de carbone ou de précurseur de carbone, la transformation du précurseur étant dans ce dernier cas réalisée par traitement thermique après élaboration de la préforme.

La densification par la matrice en carbone est réalisée par infiltration chimique en phase vapeur ou par voie liquide.

L'infiltration chimique en phase vapeur consiste à disposer la préforme dans une enceinte et à admettre dans l'enceinte une phase gazeuse qui, dans des conditions de température et de pression prédéterminées, diffuse au sein de la préforme et forme un dépôt de carbone pyrolytique sur les fibres. La phase gazeuse comprend habituellement un ou plusieurs hydrocarbures, par exemple du méthane, donnant le carbone pyrolytique par décomposition.

La densification *carbone* par voie liquide consiste à imprégner la préforme par un précurseur de carbone à l'état liquide, par exemple une résine à taux de coke non nul, et à transformer le précurseur en carbone par traitement thermique.

Dans le domaine du freinage, les composites C/C sont aujourd'hui utilisés pour des disques de freins d'avions, mais leur utilisation pour des véhicules terrestres est limitée à la compétition automobile en F1.

Pour ces utilisations, les composites C/C sont généralement obtenus par densification d'une préforme par une matrice de carbone pyrolytique réalisée par infiltration chimique en phase vapeur. Or, ce processus est long et coûteux, et conduit à des prix de revient généralement incompatibles avec ce qui est exigé pour des utilisations dans d'autres domaines, tels que les véhicules ferroviaires ou les véhicules de tourisme de série. De plus, dans ces autres utilisations, les sollicitations des éléments de friction sont très différentes de celles rencontrées sur des avions ou des automobiles de compétition en F1. Et bien que ces sollicitations soient en général moins sévères, des essais effectués par la déposante ont révélé un certain nombre de problèmes. Ainsi, il est apparu que l'efficacité du freinage varie notablement en fonction de l'intensité du freinage et est relativement faible dans des conditions de freinage humide. De plus, l'usure est significative et conduit à une durée de vie insuffisante.

Afin de résoudre au moins en partie ces problèmes, en particulier diminuer le prix de revient et augmenter la résistance à l'usure, il a été proposé de réaliser des éléments de friction en composite C/C obtenus par densification d'une préforme par voie liquide et en effectuant une opération finale de siliciuration par imprégnation par du silicium en fusion qui réagit avec le carbone de la matrice pour former du carbure de silicium (SiC).

Toutefois, les performances du matériau restent insuffisantes, en particulier pour ce qui est de la résistance à l'oxydation, en dépit de la couche de SiC formée par siliciuration. La matrice de carbone obtenue par voie liquide présente de façon inévitable un réseau de fissuration. Les fissures offrent des voies d'accès vers les fibres de la préforme tant au silicium fondu, lors de la siliciuration, qu'à l'oxygène ambiant lors de l'utilisation sous air. Il s'ensuit que les libres peuvent être partiellement attaquées par le silicium et sont plus facilement oxydées, entraînant une dégradation accélérée des propriétés du composite.

La présente invention a pour but de fournir des éléments de friction en composite C/C-SiC dont le coût et les performances les rendent aptes à être utilisés pour des freins de véhicules ferroviaires ou de véhicules automobiles de tourisme de série ou de véhicules utilitaires ou industriels tels que des poids lourds.

En particulier, l'invention a pour but de fournir des éléments de friction qui offrent une efficacité de freinage régulière et reproductible, dans des conditions de freinage intense ou non, et dans un environnement sec ou humide.

La présente invention a encore pour but de fournir des éléments de friction qui s'usent faiblement et sont susceptibles d'être utilisés en frottement contre des matériaux de natures différentes.

Ces buts sont atteints grâce à un élément de friction ayant au moins une face frottante et réalisé en un matériau composite comprenant un renfort en fibres de carbone et une matrice ayant au moins une phase en carbone et ce phase en carbure de silicium, élément de friction dans lequel, au moins au voisinage de la ou chaque face frottante, la matrice comprend : une première phase contenant du pyrocarbone obtenu par infiltration chimique en phase vapeur, au voisinage des fibres du renfort, une deuxième phase réfractaire obtenue au moins en partie par pyrolyse à partir d'un précurseur liquide, et une phase de carbure de silicium.

Un tel élément de friction peut constituer un disque de frein, ou au moins une garniture de friction de disque de frein, dans un frein à disques de véhicule ferroviaire, un frein de véhicule automobile de tourisme de série ou un frein de véhicule industriel ou utilitaire.

Par phase de pyrocarbone, on entend ici une phase de carbone pyrolytique obtenue par infiltration chimique en phase vapeur en utilisant un ou plusieurs précurseurs gazeux du carbone.

Par phase réfractaire, on entend ici une phase de carbone ou de céramique.

Avantageusement, au moins au voisinage de la ou chaque face frottante, le matériau composite est constitué, en volume, de
- 15 % à 35 % de fibres de carbone,
- 10 % à 55 % de première phase de matrice contenant du pyrocarbone obtenu par infiltration chimique en phase vapeur,
- 5 % à 30 % de deuxième phase de matrice en matériau réfractaire provenant au moins en partie d'un précurseur liquide, et
- 10 % à 35 % de carbure de silicium.

La phase de matrice obtenue par infiltration chimique en phase vapeur forme sur les fibres un revêtement continu de pyrocarbone d'épaisseur constante et, au moins initialement, non fissuré. Le pyrocarbone, en gainant complètement les fibres, peut les protéger lors de la formation de la phase de matrice en carbure de silicium. En outre, le pyrocarbone obtenu par infiltration chimique en phase vapeur a une conductivité thermique assez élevée et procure au matériau composite des propriétés thermomécaniques minimales permettant en particulier de remplir la fonction puits de chaleur pour évacuer les calories engendrées par le frottement. Outre le pyrocarbone, la première phase de matrice peut comporter une ou plusieurs couches d'un matériau capable de protéger le pyrocarbone, ainsi que les fibres de carbone sous-jacentes, contre l'oxydation. Un matériau de protection contre l'oxydation susceptible d'être déposé par infiltration chimique en phase vapeur est le carbure de silicium, un système ternaire Si-B-C ou du carbone de bore. Ce matériau peut être choisi parmi des précurseurs de verte autocicatrisant, c'est-à-dire susceptibles, après oxydation, de former un verre qui, en passant à l'état pâteux à la température d'utilisation de l'élément de friction, colmate des fissures apparaissant dans la première phase de matrice.

Différents types de procédés peuvent être utilisés pour réaliser l'infiltration chimique en phase vapeur, notamment des procédés isobares-isothermes, des procédés à gradient de température, des procédés à gradient de pression, ou des procédés à film vaporisé. Des procédés à gradient de température peuvent être mis en oeuvre par couplage inductif entre un inducteur et un induit situé d'un côté de la préforme à densifier ou par couplage direct entre un inducteur et la préforme. Les procédés isothermes et à gradient de pression peuvent être réalisés en imposant un trajet à la phase gazeuse précurseur de la matrice soit avec flux dirigé dans des conditions isobares, comme décrit dans la demande de brevet français 2 733 254, soit avec flux forcé, comme décrit dans la demande de brevet internationnal WO 96/15288. Les procédés à film vaporisé consistent à immerger la préforme dans un bain et à chauffer la préforme à une température telle qu'il se forme un film de vapeur de précurseur au contact de la préforme, l'infiltration se faisant alors en phase vapeur, comme décrit par exemple dans le brevet US 4 472 454.

La deuxième phase de matrice en carbone ou en céramique peut être formée par un coke de résine ou de brai ou par un résidu céramique de pyrolyse de précurseur de céramique. Des résines précurseurs de carbone à l'état liquide sont choisies par exemple parmi les résines thermodurcissables, telles que résines phénoliques, furaniques ou époxy, les résines thermoplastiques, les brais, ou leurs combinaisons. Des précurseurs de céramique à l'état liquide sont par exemple des résines polycarbosilanes ou polysilazanes ou leurs combinaisons. Une phase de matrice obtenue par voie liquide, telle qu'un coke de résine, présente une conductivité thermique relativement faible. Cela permet, dès le début du freinage, d'atteindre une température locale relativement élevée au niveau de la face frottante. Or, lorsqu'ils sont utilisés en frottement, les composites C/C-SiC présentent un coefficient de frottement qui est relativement faible à froid, et plus élevé à chaud. Une transition rapide vers un coefficient de frottement élevé permet alors d'obtenir une bonne efficacité de freinage dès les très basses vitesses ainsi qu'en condition de freinage humide. De plus, la phase réfractaire obtenue par voie liquide ne représente qu'une partie de la matrice, non au contact des fibres, et ne pénalise pas de façon inacceptable la fonction puits de chaleur. En outre, la deuxième phase de matrice se présente sous forme d'amas de carbone ou de céramique qui se logent au coeur des pores subsistant après formation de la première phase de matrice. Il en résulte une possibilité accrue de fermer la porosité par le carbure de silicium de la dernière phase de matrice. Cette fermeture de la porosité permet d'éviter l'influence d'un environnement humide sur les propriétés tribologiques.

Il est possible de former partiellement la deuxième phase de matrice par des charges solides, par exemple une poudre de carbone ou une poudre de céramique, ou une poudre d'un matériau de protection contre l'oxydation. Les charges solides peuvent être introduites sous forme d'une suspension dans le précurseur liquide.

La phase de matrice en carbure de silicium est efficace pour réduire l'usure. Elle confère en particulier au matériau composite une dureté accrue qui permet d'y associer en frottement un large éventail de matériaux différents. De plus, la présence de SiC permet d'obtenir une efficacité à sec dès les plus basses énergies de freinage. En outre, le SiC apporte une résistance accrue à l'oxydation, en formant une barrière vis-à-vis de l'oxygène ambiant, au coeur du matériau composite, et en obturant la porosité, au moins dans une large mesure.

Selon une particularité de l'élément de friction conforme à l'invention, la matrice présente une phase de carbure de silicium qui peut n'être présente que sur une profondeur limitée à partir de la ou chaque face frottante.

Ainsi, dans le cas où l'élément de friction est un disque de frein comportant une âme et au moins une partie de friction, ou partie d'usure, ayant une face frottante, l'âme du disque peut être au moins en partie constituée de matériau composite dans lequel la matrice ne comporte pas de phase en carbure de silicium. En outre, l'absence de phase en carbure de silicium confère à l'âme une moindre rigidité et préserve un bon comportement mécanique de l'âme du disque pour la reprise des efforts de freinage qui sont transmis généralement par liaison mécanique au niveau de la couronne intérieure ou extérieure de l'âme.

Il est en outre possible de réaliser un élément de friction conforme à l'invention sous forme d'une garniture de friction, ou garniture d'usure, fixée sur une âme de disque métallique. La garniture de friction peut présenter une phase de carbure de silicium dans toute son épaisseur ou sur une profondeur limitée à partir de la face frottante.

Selon un autre de ses aspects, l'invention a aussi pour but de fournir un procédé de fabrication d'un élément de friction en matériau composite C/C-SiC, procédé du type comprenant l'élaboration d'une préforme en fibres de carbone présentant une porosité interne accessible et la densification de la préforme par une matrice ayant au moins une phase en carbone et une phase en carbure de silicium.

Conformément à l'invention, la densification de la préforme comprend : une première étape d'infiltration chimique en phase vapeur afin de combler partiellement la porosité interne initiale de la préforme par une première phase de matrice contenant du pyrocarbone et formant un revêtement continu sur les fibres de carbone ; une deuxième étape de densification par imprégnation de la préforme partiellement densifiée par une composition contenant un précurseur de matériau réfractaire à l'état liquide et transformation du précurseur par traitement thermique ; et une troisième étape de formation d'une phase de matrice en carbure de silicium au moins au voisinage de la ou chaque face frottante.

Selon une particularité du procédé, lors de la première étape de densification, on peut former par infiltration chimique en phase vapeur une première phase de matrice contenant du pyrocarbone et au moins une couche de matériau de protection contre l'oxydation.

Selon une autre particularité du procédé, la deuxième étape de densification est réalisée par imprégnation de la préforme partiellement densifiée par une composition contenant un précurseur à l'état liquide comprenant l'un au moins des composés choisis parmi les résines et brais donnant un résidu de carbone par pyrolyse et les résines donnant un résidu de céramique par pyrolyse. La composition peut aussi contenir des charges solides en suspension telles que des poudres de carbone, de céramique ou d'un matériau de protection contre l'oxydation.

La phase de matrice en carbure de silicium peut être formée de différentes façons :
- siliciuration par introduction de silicium à l'état fondu et réaction de celui-ci avec du carbone d'au moins l'une des deux premières phases de matrice ;
- siliciuration par infiltration par un gaz porteur de silicium ou par vapeur de silicium à haute température, typiquement plus de 1800°C ;
- siliciuration par introduction de charges solides sous forme de poudre de silicium et traitement thermique pour faire réagir le silicium avec du carbone de la matrice ;
- infiltration chimique en phase vapeur ; ou
- introduction de charges solides sous forme de poudre de SiC en suspension dans un liquide infiltré au sein de la préforme partiellement densifiée.

Dans le cas de la siliciuration, celle-ci est avantageusement réalisée simultanément sur plusieurs préformes densifiées, en disposant plusieurs préformes densifiées en alternance avec des sources de silicium comprenant une phase majoritaire à base de silicium et une phase minoritaire apte à former une structure de rétention et de drainage du silicium en fusion, et en chauffant à une température supérieure à la température de fusion du silicium, de sorte que, à partir de chaque source, le silicium en fusion peut migrer au sein de la ou chaque préforme densifiée adjacente. Un tel procédé de siliciuration est décrit dans la demande de brevet français n° 95 13 458 du 14 novembre 1995, au nom de la déposante.

Ce procédé présente l'avantage de permettre un contrôle du degré de siliciuration. A cet effet, la quantité de silicium introduit dans une préforme densifiée à travers la ou chaque face frottante est déterminée en fonction d'une profondeur souhaitée de siliciuration, de manière à former une phase de matrice en carbure de silicium sur une profondeur limitée à partir de la ou chaque face frottante.

Des modes de réalisation de l'invention seront décrits ci-après de façon détaillée, à titre indicatif, mais non limitatif. Il sera fait référence aux dessins annexés sur lesquels :
- la figure 1 montre les étapes successives d'un procédé selon l'invention ;
- les figures 2A, 2B et 2C sont des vues très schématiques de la microstructure du matériau composite à différentes étapes de la réalisation d'un élément de friction ; et
- les figures 3 et 4 montrent des courbes représentant la variation du coefficient de frottement dans le temps lors d'essais d'un élément de friction conforme à l'invention, pour différentes vitesses de glissement, différentes pressions de freinage, et en environnements sec et humide.

Dans la description qui suit, on envisage plus particulièrement la réalisation d'un élément de friction sous forme d'un disque de frein en matériau composite C/C-SiC, étant entendu que d'autres types d'éléments de friction peuvent être réalisés dans le même matériau, tels que des patins de freins et des garnitures de friction fixées sur une face ou les deux faces d'âmes de disques à une ou deux faces frottantes.

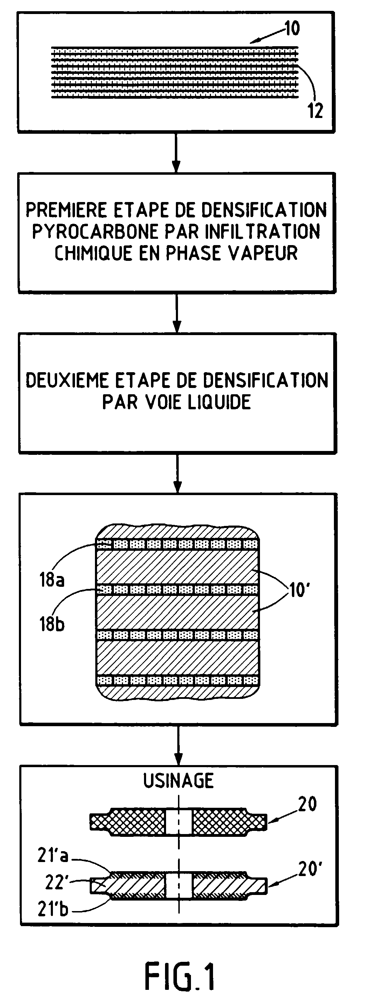

La réalisation d'un disque de frein comprend (figure 1) :
- l'élaboration d'une préforme fibreuse annulaire 10 en fibres de carbone,
- une première étape de densification partielle de la préforme par une phase de matrice au moins en partie en pyrocarbone obtenu par infiltration chimique en phase vapeur,
- une deuxième étape de densification partielle par une phase de matrice en carbone ou céramique obtenu au moins en partie par voie liquide,
- une étape de formation d'une phase de matrice en carbure de silicium, et
- une étape finale d'usinage du disque à ses dimensions définitives.

La préforme fibreuse 10 est élaborée par superposition de couches ou strates d'une texture fibreuse 12 ou de plusieurs textures différentes, et liaison des strates entre elles par aiguilletage. La texture fibreuse 12 peut être constituée par un feutre, un tissu, un tricot, une nappe unidirectionnelle de fils, câbles ou torons, ou un complexe formé de plusieurs nappes unidirectionnelles superposées avec des directions différentes et liées entre elles par aiguilletage léger. Les différentes couches ou strates sont empilées et aiguilletées une à une comme décrit notamment dans le document US-A-4 790 052, chaque passe d'aiguilletage étant réalisée avec densité surfacique de coups d'aiguilles et profondeur de pénétration des aiguilles sensiblement constantes, afin d'obtenir une densité volumique d'aiguilletage sensiblement uniforme. L'empilement et l'aiguilletage des couches ou strates est poursuivi jusqu'à obtenir l'épaisseur de préforme désirée.

La texture fibreuse 12 est en fibres de carbone ou en fibres de précurseur de carbone, par exemple en fibres de polyacrylonitrile préoxydé. Dans ce dernier cas, la transformation du précurseur en carbone est réalisée par traitement thermique effectué sur la texture fibreuse avant ou après élaboration de la préforme.

Une préforme annulaire peut être obtenue par empilement et aiguilletage des strates planes et découpe de la préforme par emporte-pièce à la fin du processus d'aiguilletage. Il est possible aussi d'utiliser des strates annulaires prédécoupées. Ces procédés sont bien connus, de sorte qu'il n'est pas nécessaire de les décrire ici de façon détaillée.

Le taux volumique de fibres carbone dans la préforme est de préférence en moyenne compris environ entre 15 % et 35 %. Il est fonction du taux de couverture de la texture fibreuse utilisée et de l'intensité de l'aiguilletage qui produit un effet de tassement de la texture fibreuse. Par taux volumique de fibres, on entend ici la fraction du volume apparent de la préforme effectivement occupé par les fibres. On notera que le taux volumique de fibres peut être plus faible au voisinage des faces frottantes, par exemple être abaissé jusqu'à 10 %, en comparaison avec la partie de préforme correspondant à l'âme du disque. Un taux volumique de fibres trop faible au niveau de l'âme du disque pénalise la fonction de renfort fibreux, donc les propriétés mécaniques de l'âme du disque composite obtenu, tandis qu'un taux volumique de fibres trop élevé entraîne une réduction de la porosité préjudiciable à la densification. La préforme présente donc une porosité interne comprise entre 65 % et 85 % en volume et, notamment du fait du mode d'élaboration, cette porosité est ouverte, c'est-à-dire accessible de l'extérieur.

Avant la première étape de densification, des charges solides peuvent être introduites dans la préforme pour occuper environ 2 à 10 % du volume de la préforme. Ces charges solides sont sous forme de poudre réfractaire, c'est-à-dire de poudre de carbone ou de poudre céramique.

La première étape de densification est réalisée en plaçant la préforme dans une chambre d'une installation d'infiltration chimique en phase vapeur par processus isotherme-isobare. Une phase gazeuse réactionnelle est introduite dans la chambre où sont établies des conditions de température et de pression propres à favoriser la diffusion de la phase gazeuse au sein de la porosité de la préforme, et le dépôt du matériau de la matrice sur les fibres par réaction de la phase gazeuse au contact de la surface des fibres. Un dépôt de carbone pyrolytique est typiquement obtenu à partir d'une phase gazeuse comprenant un ou plusieurs hydrocarbures, par exemple du méthane. La température dans l'enceinte est typiquement maintenue à une valeur comprise entre 950°C et 1150°C et la pression entre 1 kPa et 3 kPa.

De préférence, plusieurs préformes annulaires sont disposées dans la chambre de l'installation d'infiltration chimique en phase vapeur pour être traitées simultanément. Un exemple de chargement de plusieurs préformes en piles, avec flux dirigé de la phase gazeuse, est décrit dans la demande de brevet français n° 2 733 254 déjà citée.

Comme déjà indiqué, d'autres processus d'infiltration chimique en phase vapeur peuvent être utilisés, par exemple des processus à gradient de température, éventuellement avec chauffage de la préforme par couplage inductif direct, des processus à gradient de pression, ou des processus à film vaporisé.

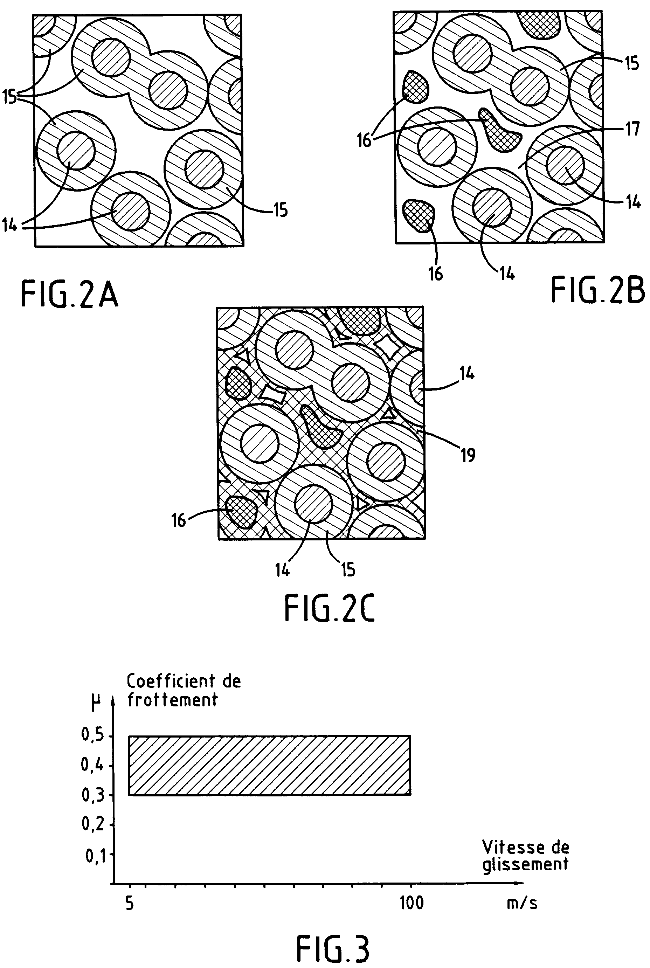

L'infiltration chimique en phase vapeur conduit à la formation d'un revêtement de carbone pyrolytique continu 15 gainant individuellement les fibres 14 (figure 2A). Cette première phase de densification de la préforme est poursuivie jusqu'à combler de préférence entre 10 % et 55 % environ du volume de la préforme par du pyrocarbone. En effet, la quantité de pyrocarbone déposé sur les fibres doit être suffisante pour conférer au disque la capacité de conduction thermique requise afin d'assurer les fonctions de puits de chaleur et de tenue mécanique. Toutefois, la quantité de pyrocarbone déposé doit rester limitée afin de laisser subsister une porosité suffisante en vue de la poursuite de la densification.

La première étape de densification peut aussi comprendre la formation d'une ou plusieurs couches de matériau de protection contre l'oxydation, recouvrant le pyrocarbone ou intercalée(s) avec des couches de pyrocarbone. Le matériau de protection contre l'oxydation déposé par infiltration chimique en phase vapeur peut être du carbure de silicium, du carbure de bore, ou un composé ternaire Si-B-C. Avantageusement, on choisit un matériau susceptible, en milieu oxydant, de former un verte autocicatrisant à la température d'utilisation du disque de frein.

La deuxième étape de densification est réalisée par voie liquide en imprégnant la préforme partiellement densifiée par un précurseur de carbone ou de céramique à l'état liquide et en transformant le précurseur par traitement thermique.

Un précurseur de carbone est typiquement une résine ayant un taux de coke non nul (le taux de coke étant le pourcentage de résidu carboné obtenu après carbonisation par rapport à la masse initiale de la résine), ou encore un brai. Des résines utilisables sont notamment des résines thermodurcissables telles que résines phénoliques, furaniques et époxy, des résines thermoplastiques, des brais ou leurs combinaisons. Un précurseur de céramique est typiquement une résine telle qu'une résine polycarbosilane ou polysilazane ou une combinaison de celles-ci.

L'imprégnation est réalisée par exemple par immersion de la préforme dans un bain d'une composition d'imprégnation formée par la résine éventuellement additionnée d'un solvant. L'imprégnation peut être effectuée sous pression ou sous vide afin de favoriser la pénétration de la composition d'imprégnation jusqu'au coeur de la porosité restante de la préforme. La préforme imprégnée est séchée puis, après réticulation de la résine, est soumise à un traitement de pyrolyse en étant portée à une température d'environ 900°C à 1000°C.

La deuxième étape de densification est conduite en un ou plusieurs cycles d'imprégnation-carbonisation successifs, de manière a combler environ entre 10 % et 40 % du volume de la préforme par la phase de matrice réfractaire. En effet, la quantité de carbone ou céramique obtenu par voie liquide doit être suffisante pour avoir, dans le matériau composite final, une phase de matrice réfractaire de faible conductivité thermique favorisant une transition rapide vers un coefficient de frottement élevé. Toutefois, il doit subsister une porosité interne accessible résiduelle suffisante, de préférence au moins égale à 20 % en volume pour permettre la formation de la phase de matrice en carbure de silicium.

Dans l'exemple illustré, le matériau réfractaire obtenu par voie liquide est du carbone. Il se présente sous forme d'amas 16 de coke de résine ou de brai logés dans les pores 17 de la préforme partiellement densifiée (figure 2B).

Lors de la deuxième étape de densification, des charges solides peuvent être introduites en suspension dans le précurseur liquide. Ces charges solides sont constituées par exemple par une poudre de carbone, une poudre de céramique, ou une poudre de matériau de protection contre l'oxydation tel qu'un précurseur de verte auto-cicatrisant.

La phase de matrice en carbure de silicium peut être obtenue par siliciuration de la préforme c'est-à-dire par introduction de silicium en fusion ou sous forme de vapeur au sein de la porosité accessible restante et réaction du silicium avec le pyrocarbone de la première phase de matrice et avec le carbone de la deuxième phase de matrice. Différentes techniques de siliciuration connues peuvent être utilisées, par exemple par immersion dans un bain de silicium en fusion ou en reliant la préforme densifiée à un bain de silicium en fusion par un drain amenant le silicium à la préforme par capillarité.

Avantageusement, on utilise un procédé de siliciuration en pile du type décrit dans la demande de brevet français n° 95 13458 précitée. Plusieurs préformes densifiées 10' sont superposées en intercalant des sources de silicium 18, celles-ci étant disposées entre préformes 10' et également aux extrémités de la pile. Les sources de silicium 18 sont constituées d'une phase majoritaire en silicium, ou à base de silicium, par exemple sous forme de poudre, et d'une phase minoritaire apte à former une structure de rétention et de drainage du silicium en fusion. La phase minoritaire est par exemple une structure alvéolaire rigide telle qu'une structure en nid d'abeilles 18a dont les alvéoles sont remplies de silicium en poudre 18b. En variante, la phase minoritaire peut être constituée par un réseau tridimensionnel à forte porosité, tel qu'un feutre formé de fibres courtes, ou une texture alvéolaire non rigide, telle qu'une mousse, la phase minoritaire s'étendant dans tout le volume de la source de silicium.

Le traitement de siliciuration est réalisé en portant l'empilement de préformes 10' et sources de silicium 18 à une température par exemple comprise entre 1410°C et 1600°C, sous une pression réduite, par exemple inférieure à 50 kPa, et sous atmosphère neutre, par exemple sous argon ou sous vide. Lorsque le silicium contenu dans les sources 18 atteint son point de fusion, il migre vers les préformes adjacentes à travers leurs surfaces en contact avec les sources 18. A partir d'une source 18, cette migration se fait par gravité vers une préforme 10' située au-dessous et par capillarité vers une préforme 10' située au-dessus.

Le silicium en fusion s'infiltrant dans la porosité restante des préformes densifiées 10' forme du carbure de silicium (SiC) 19 par réaction avec le carbone, tant le pyrocarbone 15 que celui 16 obtenu par voie liquide, (figure 2c). Une couche SiC est ainsi formée jusqu'au coeur de la préforme densifiée, la porosité de celle-ci n'étant pas obturée. Cette couche, selon la porosité restante de la préforme densifiée, avant siliciuration, peut avoir une épaisseur de quelques microns à plus de 10 microns, si la source de silicium est suffisante. De la sorte, on procure au disque obtenu une protection interne contre l'oxydation par le SiC 19 formant barrière vis-à-vis de l'oxygène du milieu environnant. En outre, au voisinage des faces frottantes du disque, le SiC procure à celui-ci dureté et résistance à l'usure. On notera aussi que, par réaction du silicium avec le pyrocarbone qui recouvre la surface des pores 17 ainsi qu'avec le carbone des grains 16 qui occupent partiellement ces mêmes pores, le SiC obtenu 19 conduit à une obturation au moins partielle des pores, donc à une étanchéification du matériau composite. Il en résulte une moindre influence à un environnement humide.

Le disque obtenu 20 est usiné à ses dimensions définitives, notamment par rectification de sa ou ses faces frottantes et formation à sa périphérie, ou à sa surface interne, d'encoches (non représentées) permettant de relier le disque 20 avec un organe dont il est solidaire en rotation.

On notera que l'usinage du disque peut être réalisé avant siliciuration. Les faces des sources de silicium 18 utilisées ont alors des formes complémentaires de celles des faces des disques.

Le traitement de siliciuration est réalisé de manière a occuper entre 10 et 35 % du volume de la préforme densifiée par du carbure de silicium. La porosité résiduelle de la préforme densifiée est réduite de préférence à une valeur inférieure à 10 % en volume après siliciuration.

Le disque 20 obtenu comprend alors, en volume :
- de *15* % à 35 % de fibres de carbone,
- de 10 % à 55 % de pyrocarbone formé par infiltration chimique en phase vapeur et non transformé en SiC,
- de 5 % à 30 % de carbone obtenu par voie liquide et non transformé en SiC, et
- de 10 % à 35 % de SiC.

Un tel matériau présente une masse volumique très faible, comprise entre 1 600 et 2 100 kg/m³, un coefficient de dilatation thermique inférieur à 2.10⁻⁶ par °K et une diffusivité thermique supérieure à celle des aciers. En outre, comme il ressortira des exemples figurant plus loin, les niveaux de frottement sont stables et reproductibles, sans discontinuité brutale et sans influence significative des contraintes environnantes.

Bien que l'on ait envisagé ci-avant une siliciuration de la préforme densifiée jusqu'au coeur de celle-ci, il pourra être avantageux de limiter la profondeur de siliciuration à partir de chaque face frottante. Cette limitation est obtenue en utilisant des sources contenant une quantité de silicium insuffisante pour une siliciuration totale. Le déficit en silicium est déterminé en fonction de la profondeur de siliciuration souhaitée. On peut alors obtenir des disques tels que 20' (figure 1) dans lesquels les parties de friction ou parties d'usure, 21'a et 21'b, sont siliciurées, tandis que l'âme du disque 22' ne comprend pas de SiC, au moins dans sa partie centrale. Ainsi, le SiC apporte les qualités souhaitées de dureté et de résistance à l'usure, ainsi que la réduction de porosité résiduelle, au niveau des parties d'usure, tandis que l'absence de SiC au moins dans une partie importante de l'âme favorise l'effet puits de chaleur et la résistance mécanique. En effet, une moindre rigidité de l'âme offre une meilleure transmission des efforts entre le disque et la partie tournante ou fixe à laquelle il est relié généralement par des encoches formées le long de la couronne intérieure ou de la couronne extérieure de l'âme.

Dans ce qui précède, il est décrit une formation de phase de matrice en carbure de silicium par siliciuration par introduction de silicium à l'état fondu. Toutefois, d'autres modes d'élaboration d'une telle phase de matrice sont envisageables, comme la siliciuration par du silicium introduit sous forme gazeuse, la siliciuration par du silicium introduit sous forme de poudre avec traitement thermique subséquent, l'infiltration chimique en phase vapeur et l'insertion de charges solides en SiC.

L'infiltration chimique en phase vapeur de SiC est un processus bien connu, le précurseur gazeux étant habituellement le méthyltrichlorosilane (MTS). Le processus peut être mis en oeuvre dans des conditions isothermes-isobares, ou avec gradient de température ou avec gradient de pression. Lors du processus à gradient de température, le chauffage de la préforme densifiée peut être réalisé par couplage direct entre la préforme et un inducteur.

L'insertion de charges peut être réalisée par imprégnation sous vide par une suspension de poudre de SiC dans un liquide. Elle peut être complétée par une étape finale d'infiltration chimique en phase vapeur.

Dans les cas d'infiltration chimique en phase vapeur et d'insertion de charges, il n'y a pas de réaction avec le pyrocarbone ou le carbone constituant éventuellement la phase réfractaire, de sorte que l'on retrouve dans le matériau composite final les quantités de carbone déposé lors des première et deuxième étapes de densification.

### EXEMPLE 1

Des disques et patins pour des freins à disque de véhicule ferroviaire sont réalisés de la façon suivante.

Les préformes fibreuses sont élaborées par aiguilletage de couches superposées de feutre en fibres de carbone et découpe des préformes de manière à obtenir des préformes annulaires de disques d'épaisseur égale à 60 mm, de diamètre intérieur égal à 235 mm et de diamètre extérieur égal à 660 mm, et des préformes parallélépipédiques de patins de dimensions 15 mm x 8 mm x 40 mm. Les taux volumiques de fibres dans les préformes sont égaux à 25 %

Une première étape de densification des préformes par infiltration chimique en phase vapeur est réalisée à partir d'une phase gazeuse constituée par un mélange de gaz naturel et de propane, la température étant maintenue à environ 1000°C et la pression à environ 1,3 kPa. L'infiltration chimique en phase vapeur est poursuivie jusqu'à combler environ 42 % du volume des préformes par du pyrocarbone.

Les préformes partiellement densifiées sont imprégnées par une résine furanique, puis traitées thermiquement, afin de former une deuxième phase de matrice en coke de résine. L'imprégnation est réalisée sous vide par immersion dans un bain de résine. Après séchage et réticulation de la résine, celle-ci est carbonisée à une température de 900°C. L'imprégnation par la résine est réalisée de manière à obtenir un coke de résine occupant 17 % du volume des préformes.

Les préformes ainsi densifiées par le carbone présentent une porosité résiduelle accessible d'environ 16 % en volume.

Après usinage des préformes densifiées, la siliciuration est réalisée par le procédé de siliciuration en pile décrit dans la demande de brevet français précitée n° 95 13458.

La quantité de silicium en fusion introduite dans les préformes densifiées est choisie de manière à obtenir une phase de matrice SiC représentant environ 20 % en volume du matériau composite siliciuré, ce qui correspond à un dépôt de SiC de plus de 10 microns d'épaisseur.

Les éléments de friction (disques et patins) ainsi obtenus ont une masse volumique d'environ 1 950 kg/m³, et une porosité finale d'environ 10 % et leur constitution, en volume, est la suivante :
- environ 25 % de fibres de carbone,
- environ 37 % de carbone pyrolytique obtenu par infiltration chimique en phase vapeur,
- environ 8 % de carbone constitué par du coke de résine, et
- environ 20 % de SiC.

Un frein constitué d'un disque et de patins ainsi réalisés est essayé sur un banc en freinage à sec, avec des vitesses de glissement variables entre 5 et 100 m/s. Le coefficient de frottement est mesuré pour différentes vitesses de glissement et à différents moments de l'essai. Sur la figure 3, la zone hachurée montre le domaine dans lequel se trouvent toutes les valeurs mesurées. L'efficacité du freinage est donc sensiblement inchangée dans une large plage de vitesses de glissement.

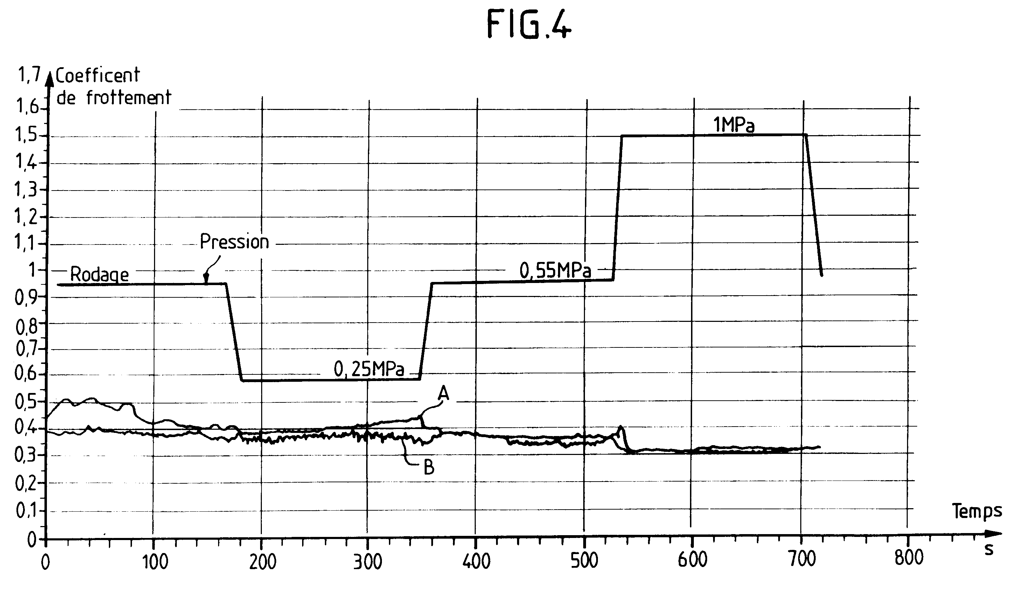

Un frein similaire est essayé en freinage à sec à une vitesse de glissement constante imposée de 20 m/s. Après rodage pendant 3 min avec application d'une pression de freinage de 0,55 MPa, le coefficient de frottement est mesuré lors d'applications de trois pressions de freinage égales respectivement à 0,25 MPa, 0,55 MPa et 1 MPa pendant des paliers de durée de 3 min. La courte A de la figure 4 montre la variation du coefficient de freinage mesuré en fonction du temps.

Un frein similaire est essayé dans les mêmes conditions à l'exception de l'environnement qui est humide, le frein étant arrosé d'eau en permanence. La courbe B de la figure 4 montre la variation du coefficient de freinage mesuré en fonction du temps.

Les courbes A et B montrent l'excellent comportement des éléments de friction en composite C-C siliciuré réalisés conformément à l'invention. D'une part, le coefficient de frottement est remarquablement stable, pour différentes pressions de freinage, et, d'autre part, des valeurs pratiquement identiques sont mesurées en environnement sec et en environnement humide. Ainsi, une efficacité de freinage constante est procurée dans ces différentes conditions d'utilisation.

### EXEMPLE 2

Des disques pour des freins à disque de véhicule de tourisme de série haut de gamme sont réalisés de la façon suivante.

Les préformes fibreuses sont élaborées par aiguilletage de couches superposées de feutre en fibres de carbone et découpe des préformes de manière à obtenir des préformes annulaires de disques d'épaisseur égale à 35 mm, de diamètre intérieur égal à 160 mm et de diamètre extérieur égal à 360 mm. Le taux volumique de fibres dans les préformes est égal à 30 %.

Une première étape d'infiltration chimique en phase vapeur est réalisée en alternant des dépôts de couches de pyrocarbone et des dépôts de couches minces (épaisseur d'environ 0,5 micron) de carbure de bore B₄C, jusqu'à combler 40 % du volume initial des préformes.

Les préformes partiellement densifiées sont imprégnées par une résine phénolique puis traitées thermiquement à 900°C afin de former une deuxième phase de matrice en coke de résine. L'imprégnation est réalisée de manière à combler environ 18 % du volume des préformes par le coke de résine, de sorte que la porosité résiduelle des préformes est d'environ *22* % en volume.

Après usinage, la siliciuration est réalisée comme dans l'exemple 1, mais sur une épaisseur limitée à partir de chaque face frottante, en utilisant des sources de silicium contenant volontairement une quantité de silicium insuffisante pour réaliser une siliciuration à coeur. Les disques obtenus ont une composition variable :
- sur les 10 premiers centimètres à partir de chaque face frottante, la composition, en volume, est de 30 % de fibres de carbone, 25 % de pyrocarbone/B₄C, 5 % de coke de résine et environ 33 % de SiC, la porosité résiduelle étant d'environ 7 %,
- dans le reste du disque, notamment dans la partie centrale de l'âme, la composition, en volume, est de 30 % de taux de fibres, 40 % de pyrocarbone/B₄C, 18 % de coke de résine et environ 0 % de carbure de silicium, la porosité résiduelle étant de 22 %.

Les disques obtenus ont une densité apparente plus faible, de l'ordre de 1 700 kg/m³ ainsi qu'une rigidité diminuée, mais des propriétés tribologiques comparables à celles des disques de l'exemple 1, dans les parties d'usure.

### EXEMPLE 3

Des disques de frein pour véhicules automobiles sont réalisés de la façon suivante.

Les préformes fibreuses sont élaborées par aiguilletage de couches superposées de feutre en fibres de carbone et découpe des préformes de manière à obtenir des préformes annulaires de disques d'épaisseur égale à 32 mm, de diamètre intérieur égal à 180 mm et de diamètre extérieur égal à 320 mm. Le taux volumique de fibres dans les préformes est égal à 30 %.

Une première étape d'infiltration chimique en phase vapeur est réalisée pour former une phase de matrice en pyrocarbone occupant 30 % du volume de la préforme.

Les préformes partiellement densifiées sont imprégnées par une résine polycarbosilane puis traitées thermiquement afin de former une deuxième phase de matrice en SiC constituée par un résidu de pyrolyse et occupant 12 % du volume de la préforme.

Les préformes ainsi densifiées sont usinées et une phase de matrice en carbure de silicium est introduite par infiltration chimique en phase vapeur dans des conditions isothermes-isobares jusqu'à occuper 20 % du volume des préformes par SiC.

La porosité résiduelle des disques obtenus est de 8 % en volume.

Un essai au banc est effectué avec des portions réalisées dans le même matériau composite et permet de vérifier la stabilité du coefficient de frottement dans une large plage de vitesses de glissement.

## Revendications

1. Elément de friction ayant au moins une face frottante et réalisé en un matériau composite comprenant un renfort en fibres de carbone et une matrice ayant au moins une phase en carbone et une phase en carbure de silicium, caractérisé en ce que, au moins au voisinage de la ou chaque face frottante, la matrice comprend : une première phase contenant du pyrocarbone obtenu par infiltration chimique en phase vapeur, au voisinage des fibres du renfort, une deuxième phase réfractaire obtenue au moins en partie par pyrolyse à partir d'un précurseur liquide, et une phase de carbure de silicium.

2. Elément de friction selon la revendication 1, caractérisé en ce qu'au moins au voisinage de la ou chaque face frottante, le matériau composite est constitué, en volume, au moins de :
- 15 % à 35 % de fibres de carbone,
- 10 % à 55 % de première phase de matrice contenant du pyrocarbone obtenu par infiltration chimique en phase vapeur,
- 5 % à 30 % de deuxième phase de matrice en matériau réfractaire provenant au moins en partie d'un précurseur liquide, et
- 10 % à 35 % de carbure de silicium.

3. Elément de friction selon l'une quelconque des revendications 1 et 2, caractérisé en ce que la première phase de matrice comprend au moins une couche en un matériau de protection contre l'oxydation.

4. Elément de friction selon l'une quelconque des revendications 1 à 3, caractérisé en ce que la deuxième phase réfractaire est en carbone.

5. Elément de friction selon l'une quelconque des revendications 1 à 3, caractérisé en ce que la deuxième phase réfractaire est en céramique.

6. Elément de friction selon l'une quelconque des revendications 1 à 5, caractérisé en ce que la matrice présente une phase de carbure de silicium sur une profondeur limitée à partir de la ou chaque face frottante.

7. Disque de frein comprenant une âme et au moins une partie d'usure ayant une face frottante, caractérisé en ce qu'il est conforme à l'une quelconque des revendications 1 à 6.

8. Disque de frein selon la revendication 7, caractérisé en ce que l'âme du disque est au moins en partie constituée de matériau composite dans lequel la matrice ne présente pas de phase en carbure de silicium.

9. Frein à disque pour véhicule ferroviaire, caractérisé en ce qu'il comprend au moins un disque selon l'une quelconque des revendications 7 et 8.

10. Frein à disque pour véhicule automobile de tourisme, utilitaire ou industriel, caractérisé en ce qu'il comprend un disque selon l'une quelconque des revendications 7 et 8.

11. Procédé de fabrication d'un élément de friction en matériau composite ayant au moins une face frottante, le procédé comprenant l'élaboration d'une préforme en fibres de carbone présentant une porosité interne accessible et la densification de la préforme par une matrice ayant au moins une phase en carbone et une phase en carbure de silicium, caractérisé en ce que la densification de la préforme comprend : une première étape d'infiltration chimique en phase vapeur afin de combler partiellement la porosité interne initiale de la préforme par une première phase de matrice contenant du pyrocarbone et formant un revêtement continu sur les fibres de carbone ; une deuxième étape de densification par imprégnation de la préforme partiellement densifiée par une composition contenant un précurseur de matériau réfractaire à l'état liquide et transformation du précurseur par traitement thermique ; et une troisième étape de formation d'une phase de matrice en carbure de silicium au moins au voisinage de la ou chaque face frottante.

12. Procédé selon la revendication 11, caractérisé en ce que l'on élabore une préforme ayant un taux volumique de fibres en moyenne compris entre 15 % et 35 %.

13. Procédé selon l'une quelconque des revendications 11 et 12, caractérisé en ce que l'on incorpore des charges solides réfractaires au sein de la préforme, avant la première étape de densification.

14. Procédé selon l'une quelconque des revendications 11 à 13, caractérisé en ce que la première étape de densification est réalisée de manière à combler entre 10 % et 55 % du volume de la préforme par la première phase de matrice contenant du pyrocarbone.

15. Procédé selon l'une quelconque des revendications 11 à 14, caractérisé en ce que, lors de la première étape de densification, on forme par infiltration chimique en phase vapeur une première phase de matrice contenant du pyrocarbone et au moins une couche de matériau de protection contre l'oxydation.

16. Procédé selon l'une quelconque des revendications 11 à 15, caractérisé en ce que la deuxième étape de densification est réalisée de manière à combler entre 10 % et 40 % du volume de la préforme par un matériau réfractaire obtenu par voie liquide.

17. Procédé selon l'une quelconque des revendications 11 à *16*, caractérisé en ce que la deuxième étape de densification est réalisée par imprégnation de la préforme partiellement densifiée par une composition contenant un précurseur à l'état liquide comprenant l'un au moins des composés choisis parmi les résines et brais donnant un résidu de carbone par pyrolyse et les résines donnant un résidu de céramique par pyrolyse.

18. Procédé selon la revendication 17, caractérisé en ce que la composition d'imprégnation comprend en outre des charges solides en suspension choisies parmi des poudres de carbone, de céramique et de matériau de protection contre l'oxydation.

19. Procédé selon l'une quelconque des revendications 11 à 18, caractérisé en ce que la troisième étape est réalisée de manière a occuper entre 5 % et 35 % du volume de la préforme par du carbure de silicium, au moins au voisinage de la ou chaque face frottante.

20. Procédé selon l'une quelconque des revendications 11 à 19 caractérisé en ce que la troisième étape est réalisée de manière à réduire la porosité interne résiduelle de la préforme densifiée à une valeur inférieure à 10 % en volume au moins au voisinage de la ou chaque face frottante.

21. Procédé selon l'une quelconque des revendications 11 à 20, caractérisé en ce que la troisième étape de formation d'une phase de matrice en carbure de silicium est réalisée par siliciuration par introduction de silicium à l'état fondu et réaction de celui-ci avec du carbone d'au moins l'une des deux premières phases de matrice.

22. Procédé selon la revendication *21,* caractérisé en ce que la siliciuration est réalisée simultanément sur plusieurs préformes densifiées, en disposant plusieurs préformes densifiées en alternance avec des sources de silicium comprenant une phase majoritaire à base de silicium et une phase minoritaire apte à former une structure de rétention et de drainage du silicium en fusion, et en chauffant à une température supérieure à la température de fusion du silicium, de sorte que, à partir de chaque source, le silicium en fusion peut migrer au sein de la ou chaque préforme densifiée adjacente.

23. Procédé selon la revendication 22, caractérisé en ce que l'on utilise des sources de silicium dans lesquelles la phase majoritaire à base de silicium est sous forme de poudre.

24. Procédé selon l'une quelconque des revendications 22 et *23,* caractérisé en ce que l'on utilise des sources de silicium dans lesquelles la phase minoritaire est une structure tridimensionnelle s'étendant dans tout le volume de la source de silicium.

25. Procédé selon la revendication 26, caractérisé en ce que la structure tridimensionnelle est choisie parmi des structures alvéolaires rigides, des réseaux fibreux, et des matériaux alvéolaires non rigides.

26. Procédé selon l'une quelconque des revendications 21 à 25, caractérisé en ce que la quantité de silicium introduit dans une préforme densifiée à travers la ou chaque face frottante est déterminée en fonction d'une profondeur souhaitée de siliciuration, de manière à former une phase de matrice en carbure de silicium sur une profondeur limitée à partir de la ou chaque face frottante.

27. Procédé selon l'une quelconque des revendications 11 à 20, caractérisé en ce que la troisième étape de formation d'une phase de matrice en carbure de silicium est réalisée par infiltration chimique en phase vapeur.

28. Procédé selon l'une quelconque des revendications 11 à 20, caractérisé en ce que la troisième étape de formation d'une phase de matrice en carbure de silicium est réalisée par siliciuration par infiltration d'un gaz porteur de silicium à haute température.

29. Procédé selon l'une quelconque des revendications 11 à 20, caractérisé en ce que la troisième étape de formation d'une phase de matrice en carbure de silicium est réalisée par siliciuration par introduction de poudre de silicium et traitement thermique.

30. Procédé selon l'une quelconque des revendications 11 à 20, caractérisé en ce que la troisième étape de formation d'une phase de matière en carbure de silicium est réalisée au moins partiellement par introduction de charges solides sous forme de poudre de carbure de silicium en suspension dans un liquide.
